# EUROPEAN PATENT APPLICATION

(11) **EP 4 806 255 A1**
(43) Date of publication of application: **16.09.2026**
(21) Application number: 26163406.7
(22) Date of filing: 09.03.2026
(51) Int. Cl.: A01F 15/07, A01F 15/14

(54) **BALER WITH BINDING DEVICE AND METHOD FOR THE FORMATION OF ROUND BALES OF AGRICULTURAL PRODUCTS**

(30) Priority: 10.03.2025 IT 202500004860
(71) Applicant: Kverneland Group Ravenna S.r.l., 48026 Russi (RA) (IT)
(72) Inventor: VECCHI, Maurizio, 48026 Russi (RA) (IT); VARLEY, Seamus, Dublin (IE)
(74) Representative: Conti, Marco

(57) **Abstract**

Described is a baler (1) for forming round bales of agricultural products comprising: a binding device (4) for wrapping the bale formed with a plastic film or a net. The binding device comprises: a reel of film or net which provides the wrapping film or net; a cutting device (401); a duckbill (402) for drawing the wrapping film from the reel along a scroll path (P) and for feeding the film into the compression chamber of the baler in the feeding direction, in such a way that the bale is wrapped by the wrapping film thanks to the rotary movement of the bale. The duckbill is movable between a drawing position and an injection position. The duckbill includes a first part (402A) and a second part (402B) with a clamping configuration, wherein the first and the second parts grab the film, and an open configuration, wherein the first and the second parts do not impede the movement of the film along the scroll path. The first and second parts are in the clamping configuration when the duckbill is in the injection position and when the cutting device is in the operating position for cutting the film.

## Description

The present invention relates to a baler and a method for forming round bales of agricultural products.

Balers, or presses, are machines which pick up and compress previously cut agricultural products such as rice, grass, wheat, maize, and the like (hereinafter referred to as "hay") from the ground, form a bale from the hay, and discharge it onto the field. The presses can be connected to the rear of a machine, such as a tractor, which is driven by an operator, and then towed by the machine (or another towing vehicle). Typically, presses have a pickup unit, comprising a pickup roller, at the front part, for picking up the hay from the ground, a compression chamber to form the bale, and a rotor apparatus feeding the hay picked up from the ground to the compression chamber of the press.

The compression chamber can be of fixed or variable diameter. In particular, a baler with a compression chamber with a fixed diameter includes a plurality of rollers that delimit the compression chamber. The hay introduced into the compression chamber moves inside the compression chamber with rotational movements caused by the rotation of said plurality of rollers about an axis of rotation.

After being formed inside the compression chamber the bales are bound by a binding material. Different materials can be used to bind the bale, for example a net or a film. The bale bound with the binding material could also be completely wrapped in film. In this case, the film is applied to the bale after the bale is bound. The complete wrapping of the bale is carried out outside the compression chamber. When the bale is to be completely wrapped, the bale is firstly bound (by means of net, film or twine) inside the compression chamber, and then completely wrapped with film outside the compression chamber (in a binding device that can be connected to the press or independent of it). However, there are also solutions in which the bale, after being formed inside the compression chamber, is directly wrapped by means of a film. For this reason, in such solutions the binding is carried out using a film rather than a net or wire. Normally, the film is a plastic film. For this reason, in this case the plastic film is applied directly onto the formed bale and inside the compression chamber. In particular, in these cases, the baler comprises a binding device (wrapping) and the bale is therefore wrapped after being formed and inside the compression chamber. In particular, in these solutions, the binding material (that is, the film) is dispensed by a binding device, inserted inside the baler and is wrapped around the formed bale. In particular, the binding material is inserted into the compression chamber and between the rotating rollers and the bale, and is moved around the circumference of the bale due to the rotating movement of the bale and the plurality of rotating rollers. One of the problems that can be encountered in this sector is that if a film is used to bind (and wrap) the bale, there may be difficulties in moving the film at the time of application on the bale and/or at the time of cutting the film after it has been wrapped around the bale.

In this context, it is known to join (pick up) the sides of the film at the end of the wrapping process (before cutting), so that the width of the film is reduced.

For this reason, there are several apparatuses and methods in this sector in which two pickup elements (to reduce the film width) come into contact with the edge of the film. These elements are moved reciprocally towards and away from one another to gather together the edges of the film. In this context, the patent document US20200323143A1 provides a gathering apparatus to selectively join edges of a film to be wrapped around a bale, and comprises a pair of pickup elements cooperating with a respective edge of the film and movable by a drive unit. In this document the drive unit is driven by a motor and by a reducer. The gathering elements are moved relative to the film in a lateral direction between an inactive position and an operating position, to gather the film as necessary.

Further examples of prior art gathering apparatuses for joining the edges of a film are described in patent documents EP1170984B1, US20040055268A1, EP3278658B1, EP3729950A1, EP1872648B1, EP2022318B1, WO2021219534A1, DE102019210962A1 and EP2506701B1.

Moreover, further examples of balers for forming round bales provided with wrapping devices for applying a binding material around the bale formed are described in patent documents EP1882409A1, EP2525644B1 and WO2022049180A1.

However the prior art devices and methods have some drawbacks and can be improved.

In particular, the prior art methods and devices for wrapping bales have several disadvantages that affect the efficiency and reliability of the wrapping process as well as contributing to the waste of plastic film.

In particular, as explained above, according to these methods, the portion of the film that enters the compression chamber and the final part cut at the end of the wrapping step undergo a reduction in width due to the action of the gathering elements (groupers). This reduction generates sections of the film with a "tail" shape, narrower than the rest of the film. These tail shape portions not only result in a waste of material, but also compromise the adhesion of the film during the wrapping process.

Because these narrower sections do not reliably adhere to the bale or to the rest of the film, they can easily detach, compromising the integrity of the wrapping. Further, the resulting waste of plastic film increases the operating costs and has a negative impact on environmental sustainability. Accordingly, there is a critical need to find a solution that minimizes the waste of plastic film while ensuring that the wrapping process is reliable and efficient.

In fact, in this sector there is a need to provide a baler with a device for wrapping the bale, which is more efficient and reliable, with greater robustness and reduced costs and complexity.

The aim of this invention is to provide a baler and a method for forming bales which overcome the above-mentioned drawbacks of the prior art.

Said aim is fully achieved by the baler and by the method according to the invention as characterised in the appended claims.

According to an aspect of the invention, the invention provides a baler. The baler is configured for the formation of round bales of agricultural products. The baler includes a compression chamber. The compression chamber is configured to impart a rotary movement to the agricultural products in order to form the bale.

The compression chamber can be of fixed or variable diameter.

The baler includes a pickup unit. The pickup unit is configured for picking up agricultural products from the ground. The pickup unit is configured to feed the products picked up into the compression chamber.

The baler includes a binding device. The binding device is configured for wrapping the formed bale with plastic film or a net. The binding device comprises a reel of film or a reel of net. The reel of film or net provides the wrapping (that is, binding) film or net. It should be noted that all the aspects according to the present invention can be combined both with the solution in which a plastic film is used to completely or partially wrap the bale and with the solution in which a net is used to bind the bale.

The binding device includes a cutting device. The cutting device is movable between a rest position and an operating position (or the cutting position). In the rest position the cutting device is distant from the wrapping film. In the operating position the cutting device is configured to cut the wrapping film in a cutting zone. The cutting zone is along the feeding direction of the film. The binding device includes a duckbill for drawing the wrapping film or net from the reel. The duckbill draws the film or net from the reel along a scroll path. The duckbill is configured to feed the film or net into the compression chamber. The film or net is fed into the compression chamber in the feeding direction, in such a way that the bale is wrapped by the film or bound with the wrapping net thanks to the rotary movement of the bale.

In one example, the feeding direction is vertical. The term 'vertical' refers to a direction parallel to the Earth's gravitational force. The duckbill is movable between a drawing position and an injection position. The duckbill includes a first and a second part. The first and second parts are reciprocally movable towards and away from each other. The first and second parts are movable between a clamping configuration and an open configuration. In the clamping configuration the first and second parts are configured to grab the film or the net between them. In the open configuration, the first and second parts do not impede the movement of the film along the scroll path.

The first and second parts are in the clamping configuration with the duckbill positioned upstream of the cutting zone with respect to the feeding direction of the film and with the cutting device in the operating position. Preferably, the first and second parts are in the clamping configuration when the duckbill is in the injection position and when the cutting device is in the operating position for cutting the film.

For this reason, according to an aspect of the present invention, it is envisaged that the film or the net is drawn, by means of the duckbill, from the reel and carried towards the compression chamber. When the initial part of the film or net is inserted into the compression chamber, the film or net begins to rotate with the bale and the duckbill is in the open configuration due to the tension that the film exerts on the moving part. When the bale is fully wrapped, the duckbill closes due to the lack of tension of the film and therefore grabs the film, in a position that does not interfere with the cutting device, in order to provide a pre-tensioned film for a more efficient cutting. For this reason, this solution eliminates the need to reduce the width of the film, and allows the film to be inserted into the compression chamber and to cut it reliably and efficiently, and simply.

In one example, the binding device includes an elastic element, in particular, the duckbill includes the elastic element. In one example, the elastic element is a spring for maintaining the first and the second parts in the clamping configuration. In one example, the first and second parts are in the open position in response to the tension of the film generated in the wrapping film injected into the compression chamber thanks to the rotary movement of the bale, which exceeds the force of the elastic element (preferably a spring).

The first and second parts are in the clamping configuration
in the absence of the film's tension.

Alternatively, an actuator may be provided to open and close the first and second parts.

In one example, the binding device includes a braking system. The braking system is operatively connected to the reel of film or net. The braking system includes an active configuration, wherein said braking system is configured to apply a resistance to the rotation of the reel of film, thereby generating a tension in the wrapping film. The braking system includes an inactive configuration in which no resistance is applied to the movement of the reel. In one example, at least one of the first and second portions includes, at least in an zone that comes into contact with the film in the clamping configuration, a part made of rubber or other material with a high friction coefficient.

This solution increases the grip of the clamping device. This is essential for feeding the film in windy conditions but also for carrying the cut end of the film into the pressure chamber.

In one example, the duckbill is vertically movable between a raised position and a lowered position.

In one example, the duckbill is configured to be in the raised position with the first and second parts in the clamping configuration with the cutting device in the cutting position to draw the film from the reel.

In one example, the duckbill is configured to be in the lowered position with the first and second parts in the clamping configuration with the cutting device in the rest position to inject the film into the compression chamber at the start of a cycle for wrapping the bale.

In one example, the duckbill is configured to be in the lowered position with the first and second parts in the open position to allow the wrapping of the bale.

In one example, the duckbill is configured to be in the raised position with the first and second parts in the clamping configuration and the cutting device in the operating position at the end of the wrapping of the bale.

In another example, the duckbill is configured to be in a position upstream of the cutting zone and downstream of the raised position along the feeding direction (thus at a height lower than the height at which the duckbill is positioned in the raised position and at a height greater than the height at which the duckbill is positioned in the lowered position along the feeding direction; therefore, a position between the lowered position and the raised position) with the first and second parts in the clamping configuration and the cutting device in the operating position at the end of he wrapping of the bale.

The binding device may have various kinematic mechanisms to move the duckbill between the lowered and raised positions.

In one example, the binding device comprises a kinematic mechanism for moving the duckbill between the lowered position and the raised position. The mechanism includes a first arm. The mechanism includes a second arm. Each arm has an end articulated to a fixed rotation point and a movable end (translating). The duckbill is connected to the (movable) end of the first and second arms. At least one of the first and second arms is configured to be connected to an actuator, preferably at an intermediate point thereof, for performing the movement between the lowered position and the raised position.

The binding device includes an actuator. In one example, the actuator is a linear actuator. The actuator may be an electric, or hydraulic or pneumatic actuator. At least one of the arms is configured to be connected to the actuator to be moved between a lowered position and a raised position. At least one of the first and second arms is connected to a spring at its end (not movable). For this reason, preferably, at least one of the arms is connected to the actuator and at least one of the arms is connected to the spring at its end (not free). In this example, the actuator is aided by the spring positioned at the end of the arms AR1, AR2. It is possible to connect both arms to a spring.

The duckbill is connected to the free (movable) end of the arm to carry out a controlled lifting and lowering movement in response to the actuation of the actuator. In another example, the kinematic mechanism includes a track. The track has a gulley. The gulley extends vertically. In this example, the duckbill is inserted into the gulley to move vertically within the track between the raised position and the lowered position.

In one example, the binding device includes a lever. The lever has a first end and a second end. The first end of the lever is connected to a spring.

The lever is connected to the cutting device at an intermediate point. The lever has a wheel mounted in proximity to the second end. The wheel is in contact with the duckbill to follow the profile of the duckbill. In particular, the wheel follows a profile obtained directly on the part of the duckbill with which the wheel comes into contact as a result of the vertical movement of the duckbill. The intermediate point of the lever is connected to the fixed frame of the baler. The intermediate of the lever is the centre of rotation of the lever.

The vertical movement of the duckbill between the lowered position and the raised position induces the displacement of the lever via interaction with the wheel, causing the operation of the cutting device and its displacement between the operating position and the rest position. The spring keeps the wheel in constant contact with the shaped profile of the duckbill.

In one example, the binding device includes an actuator. The actuator is configured to move the duckbill between the raised and lowered positions and to move the cutting device between the rest and the operating positions. For example, the baler includes a pre-chamber. The pre-chamber is separated from the compression chamber. The baler includes a first feeding channel. The first feeding channel is configured to feed the product into the pre-chamber.

The baler also includes a second feeding channel. The second feeding channel is configured to feed the product into the compression chamber.

In this example, the control unit is configured to activate the first feeding channel and deactivate the second feeding channel, so that a core of the bale is formed inside the pre-chamber. Further, the control unit is configured to subsequently activate the second feeding channel and deactivate the first feeding channel upon transfer of the core of the bale formed inside the pre-chamber to the compression chamber, in such a way that the bale forms inside the compression chamber.

In one example, the cutting device includes a blade. The blade extends horizontally. The blade comprises a plurality of teeth. The teeth are positioned along the blade. In one example, the teeth are equidistant from each other at a predetermined distance.

In one example, the predetermined distance is at least 15 mm.

This solution allows an irregular cut to be achieved on the end of the plastic in order to keep it better inside the compression chamber.

In one example, the baler includes an idle roller. The idle roller is positioned between the film reel and the duckbill. With this solution it is possible to not pull the film directly from the reel by means of the duckbill.

According to one aspect of the present invention a method is provided for forming round bales of agricultural products. The method comprises a step of picking up the agricultural products from the ground by means of a pickup unit of a baler. The method comprises a step of feeding the products picked up into a compression chamber of the baler.

The method comprises a step of applying a rotary movement to the agricultural products inside the compression chamber to form the bale.

The method comprises a step of drawing, by means of a duckbill, a film or wrapping net from a reel along a scroll path. The method comprises a step of feeding the wrapping film into the compression chamber in a feeding direction, so that the bale is wrapped by the wrapping film thanks to the rotary motion of the bale.

The method comprises a step of moving a cutting device between a rest position, wherein the cutting device is distant from the wrapping film, and an operating position for cutting the wrapping film in a cutting zone along a direction for feeding the film.

The method comprises a step of grabbing the film by means of a first and a second part of the duckbill while the cutting device is in contact with the film to cut it in the cutting zone, at a position upstream of the cutting zone with respect to the film feeding direction.

The method comprises a step of wrapping the bale with the plastic film.

In one example, the first and second parts are held in the clamping position by means of a spring. In this example the first and second parts reciprocally move away from each other when the tension of the film exceeds the force of the spring, and reciprocally move closer to each other in the absence of the tension of the film.

The method comprises a movement of the duckbill vertically upwards and downwards between a raised position and a lowered position.

In one example, the method comprises the following steps:
- moving the duckbill to the raised position and grabbing and drawing the film from the bale while the cutting device is in the cutting position;
- moving the duckbill to the lowered position by grabbing the film, while the cutting device moves to the rest position, to move the film in the feeding direction;
- releasing the film when the duckbill is in the lowered position and when the film is injected into the compression chamber.

The method may comprise a step, in the final step of the wrapping process, of moving the duckbill upwards to the raised position or to a position upstream of the cutting zone and downstream of the raised position along the feeding direction, and grabbing the film by means of the first and second parts before the cutting device is moved to the operating position. The method may also comprise a step of moving the cutting device into an operating position and cutting the film while the film is grabbed by the clamping device.

In one example, the method comprises a step of feeding the agricultural products into a pre-chamber of the baler by means of a first feeding channel. The pre-chamber is separated from the compression chamber.

The method comprises a step of forming a core of the core inside the pre-chamber.

The method comprises a step of transferring the core of the bale to the compression chamber at the end of its formation, interrupting the feeding of the agricultural products to the pre-chamber and starting to feed it to the compression chamber via a second feeding channel.

In one example, the method comprises a step of making an irregular cut on the film during the film cutting step.

These and other features of the invention will become more apparent from the following detailed description of a preferred, non-limiting example embodiment of it, with reference to the accompanying drawings, in which:

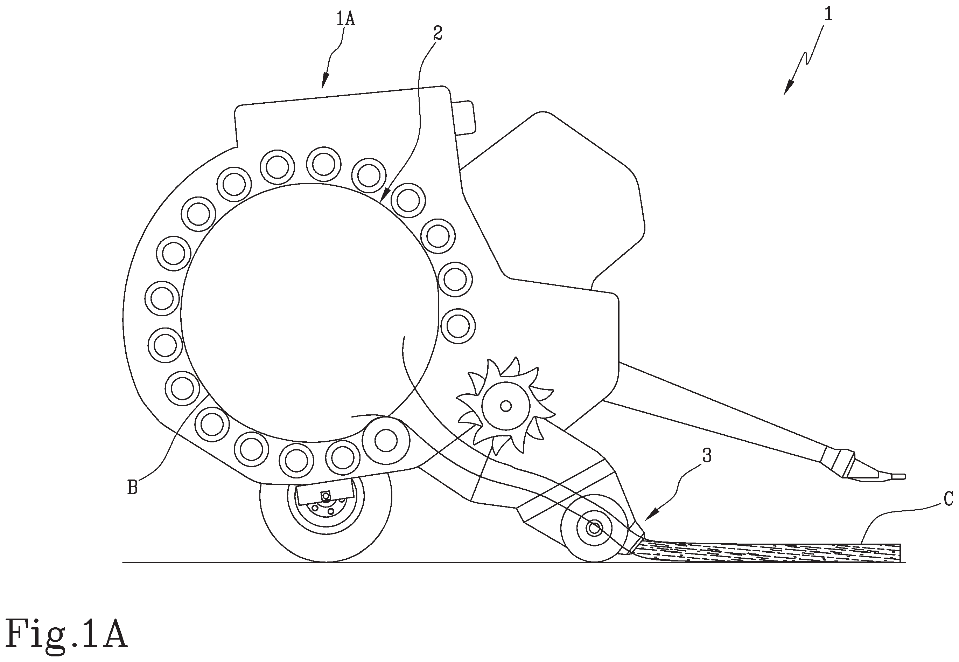

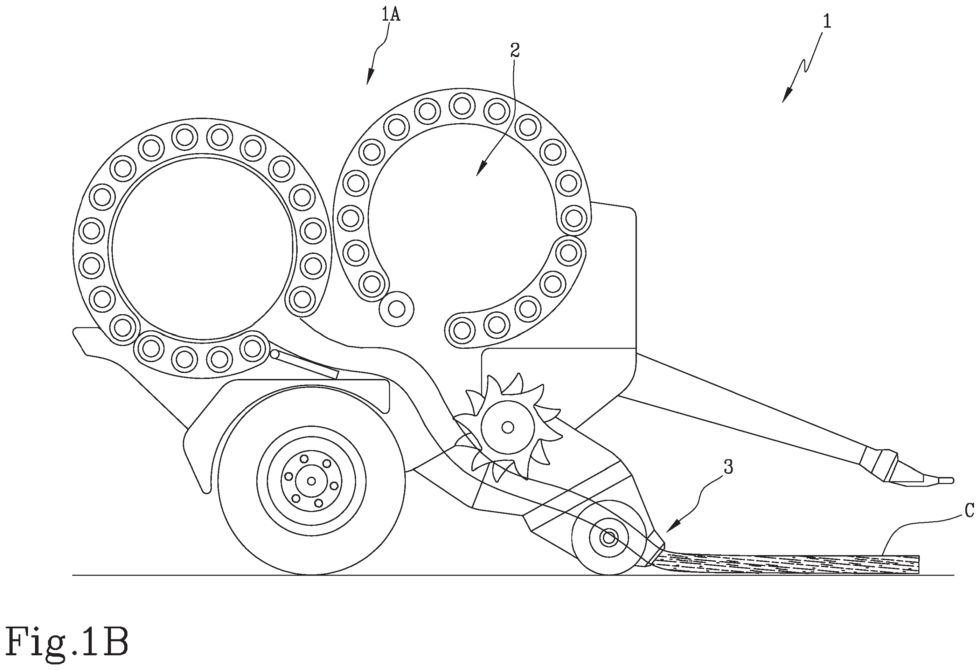

- Figures 1A and 1B illustrate two different embodiments of a baler according to one or more aspects of the present invention.

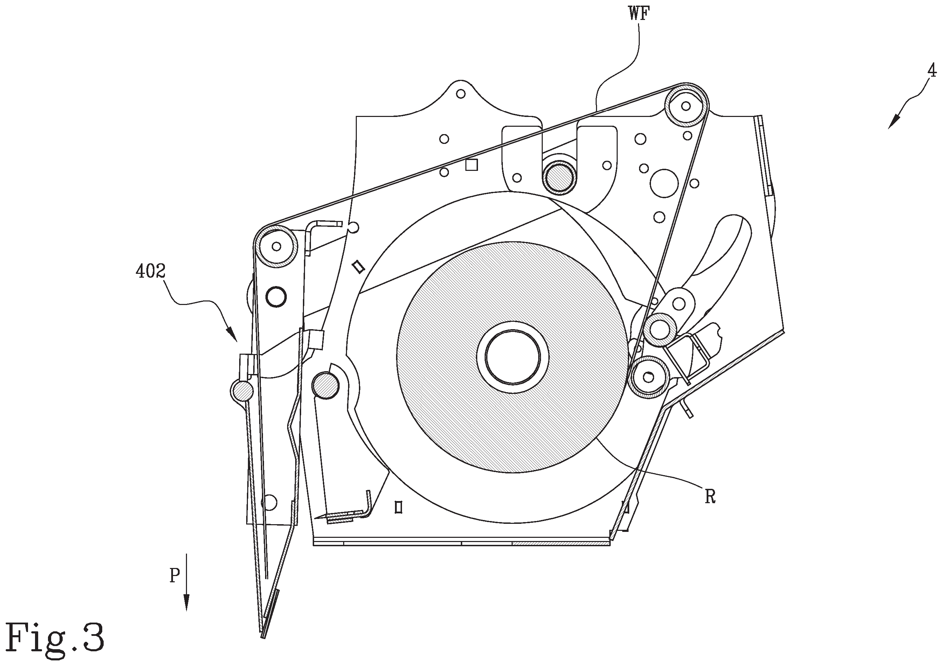

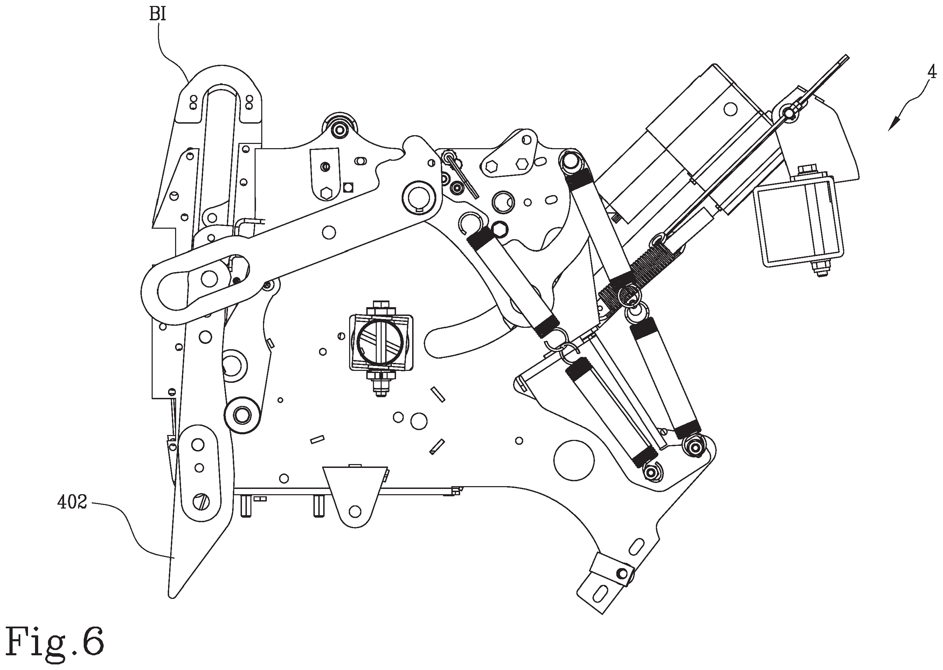

- Figures 2, 3 and 6 illustrate a binding device according to one or more aspects of the present invention with the duckbill in the lowered position;

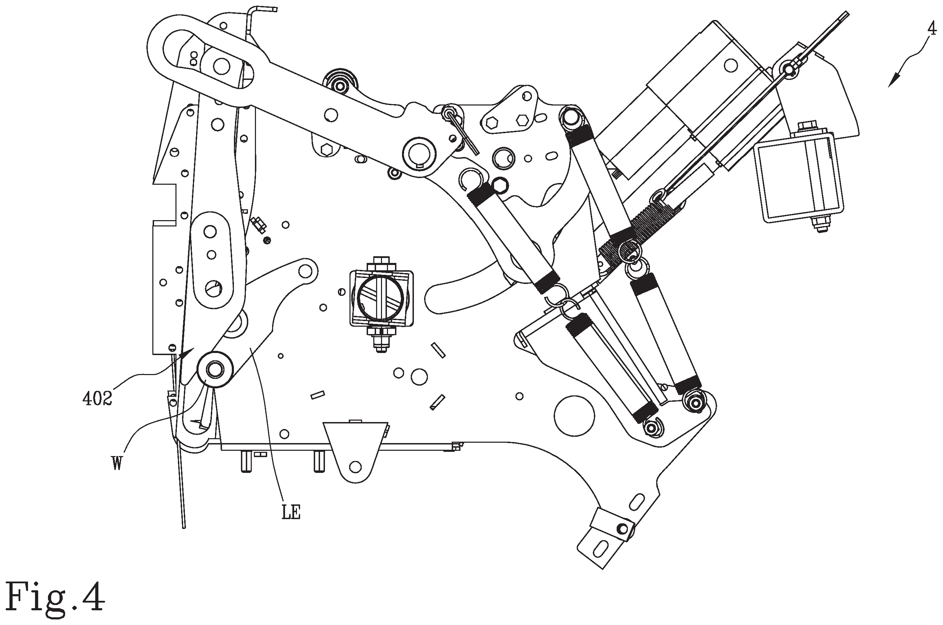

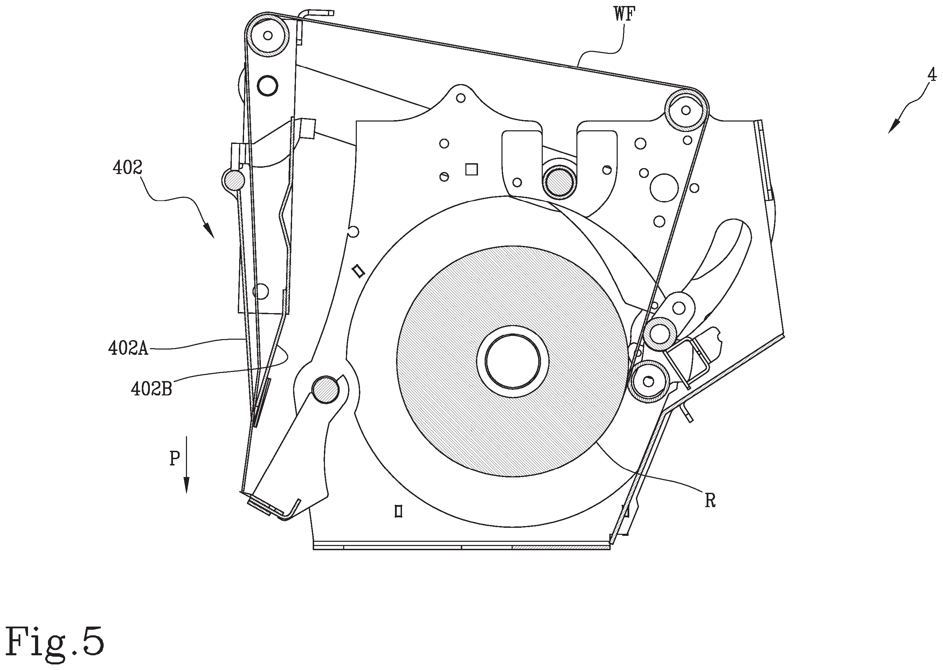

- Figures 4 and 5 illustrate a binding device according to one or more aspects of the present disclosure with the duckbill in the raised position;

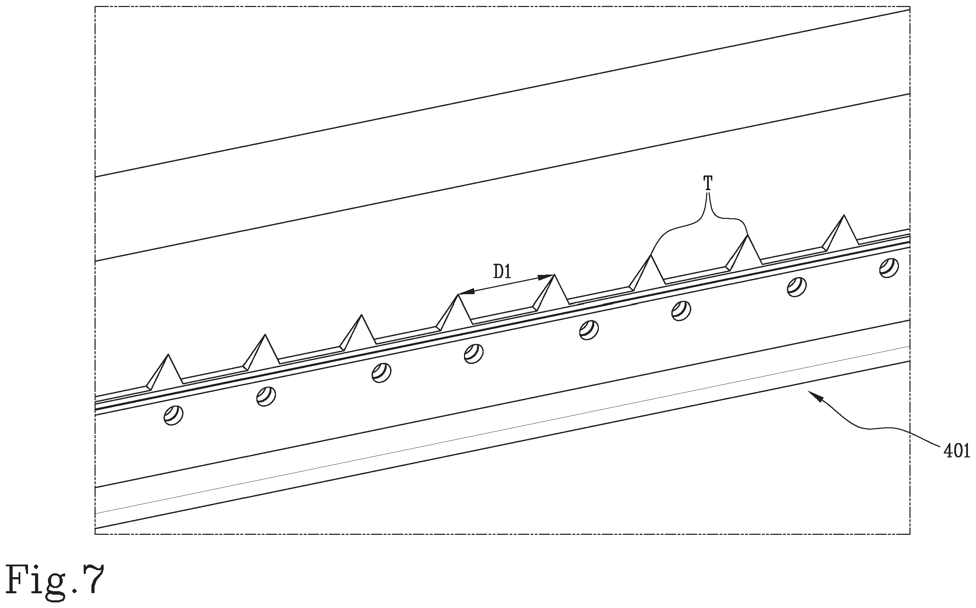

- Figure 7 illustrates details of the cutting device of the binding device. With reference to the accompanying drawings, reference numeral 1 denotes a baler, in particular a baler for forming round bales B.

The baler 1 includes a pickup unit 3. The pickup unit is configured to pick up previously cut agricultural products C, such as rice straw, grass, wheat, corn and the like, from the ground. The baler 1 includes a compression chamber 2 for receiving the products C from the pickup unit 3 and for compressing the products C to form the bale B. The compression chamber 3 is preferably of fixed diameter; however, the present invention is also applicable to balers having a variable diameter compression chamber. The pickup unit may include a rotor for conveying the product C picked up to the compression chamber 2. Rotors are known in this sector and the function of the rotor is therefore not described in this invention.

The baler 1 includes a plurality of rotary rollers. The rotating rollers delimit the compression chamber 2, rotate about an axis of rotation and thus cause a rotary movement in the product which moves inside the compression chamber. The baler 1 also includes a binding device 4 for wrapping that injects a wrapping material into the compression chamber. The wrapping material is a plastic film. Alternatively, the wrapping material is a net. It should be noted that the present invention refers to a binding device. In particular, when the binding material is a plastic film and the bale formed is completely wrapped with the film, the binding device may also be called the wrapping device. Alternatively, the bale may only be bound with the net or the plastic film and not completely wrapped.

The binding device 4 includes a reel of film R which provides the wrapping film WF. The reel is inserted inside a roller and slides, due to the rotation of said rotary roller, along a scroll path P to provide a desired portion of film from the reel.

The binding device is preferably located at an upper part 1A of the baler. In one example, the binding device is positioned outside the compression chamber and in proximity to the rotating rollers. In particular, when the film passes between the rollers and is inserted into the compression chamber, it is positioned between the product and the rollers and is dragged around the bale thanks to the rotating movement of the rollers and of the product itself.

The baler 1 includes a control unit. The control unit receives a bale forming parameter representing the formation of the bale inside the compression chamber. The control unit may receive said bale forming parameter from a detection unit, for example a sensor. In one example, the bale forming parameter may represent the density of the bale. The control unit generates, in response to the bale forming parameter, a wrapping signal to command the binding device to inject the plastic film into the compression chamber. For this reason, the bale forming parameter determines the end of the formation of the bale B inside the compression chamber 2 and the need to start the bale wrapping process. Different forming parameters can be provided. The binding device commences may also start injection of the film into the compression chamber in response to a command entered directly by the user. Furthermore, the control unit generates a stop signal which is representative of the need to stop the feeding of the product into the compression chamber 3.

The control unit may generate the stop signal with a predetermined time delay with respect to the wrapping signal, in such a way that the product continues to enter into the compression chamber for a time interval after injection of the film into the compression chamber. In one example, such a delay may be a predetermined time window. For this reason, in this example, after the start of the injection of the film into the compression chamber, the feeding of the product C inside the compression chamber continues for the preset time window (which may last for example a few second) in each wrapping cycle.

Alternatively, said time delay is variable and is determined on the basis of a wrapping parameter, for each wrapping cycle. For example, the wrapping parameter may be a position of the plastic film around the circumference of the compression chamber. The control unit also generates an end of wrapping signal. The end of wrapping signal is generated in response to a parameter representing the state of the wrapping of the bale, for example the time elapsed since the film was injected into the compression chamber or the quantity of film drawn from the reel. In response to the end of wrapping signal, the film is cut by a cutting device 401.

The cutting device 401 is movable between a rest position, in which the cutting device is distant from the wrapping film, and an operating position for cutting the wrapping film in a cutting zone along a film feeding direction.

In one example, the cutting device is a horizontal blade having a width equal to or greater than that of the film.

The blade is actuated by an actuator A, which can be hydraulic or electric. Preferably, the blade operates by striking the film to perform the cut. Its movement follows a non-linear, curved path. This means that the blade is firstly raised along a curved trajectory, creating tension or preparation, and then released to strike the film decisively, making the cut. The curved movement ensures that the blade moves in a fluid way to the correct position before the stroke, allowing precise and consistent cuts without jams or misalignments. This configuration ensures efficiency and reduces the stress on the mechanism.

The blade comprises a plurality of teeth T positioned along it. The teeth T are equidistant from each other at a predetermined distance d1.

The predetermined distance is at least 15 mm. It should be noted that in the present solution, the bale after forming is preferably wrapped by the plastic film without being previously bound with a net or other binding materials, so that the film is in direct contact with the bale; however, a binding step may also be provided before the wrapping and in such an example, the baler is provided with a binding device.

The binding device includes a duckbill 402 for drawing the wrapping film from the reel along the scroll path P and for feeding the film into the compression chamber in the feeding direction, in such a way that the bale is wrapped by the wrapping film thanks to the rotary movement of the bale; the duckbill is movable between a drawing position and an injection position. The duckbill includes a first part 402A and a second part 402B with a clamping configuration, wherein the first and the second parts grab the film, and an open configuration, wherein the first and the second parts do not interfere with movement of the film along the scroll path.

In particular, the duckbill includes two elongated, flat components extending horizontally, positioned opposite each other and forming a narrow slot at the centre between them. The duckbill is in the shape of an open "V" or parallel plates, allowing the film to pass smoothly through the slot.

A braking system is provided to apply pressure to the reel.

The braking system can be activated to generate additional tension to the film.

The duckbill includes a spring which, in the absence of other forces, maintains the first and second parts of the duckbill in the closed configuration so that they grab the film.

In particular, the first and second parts of the duckbill are in the open configuration when the braking system is active, and they are in the clamping configuration when the braking system is deactivated.

When the cutting system is moved from the rest position to the operating position (film cutting), the braking system is deactivated so that the duckbill grabs the film before cutting. Preferably, when picking up the film, the braking system is deactivated.

The braking system may be a system similar to those known in the sector. In particular, the duckbill moves upwards to draw the film from the reel and moves downwards to move the film into the compression chamber. It should be noted that the movement path of the duckbill may also be different from a vertical path upwards and downwards.

Before starting a wrapping cycle, the duckbill is moved upwards to draw the film. An idle roller 403 is provided positioned between the reel of film and the duckbill. The film is drawn from the reel, passes from the idle roller and is inserted between the two parts of the duckbill. The two parts of the duckbill are in the clamping configuration and grab the film (as there is no tension on the film yet). At this time, the reel braking system is deactivated, so there is no tension in the film. The duckbill is moved downwards and moves the film to the compression chamber. The film is taken by the rollers of the compression chamber, and thanks to their rotation it is inserted inside the compression chamber around the bale that rotates inside the rotation chamber. The binding device includes a tone wheel, similar to those known in the sector, which is in direct contact with the reel. On the basis of the rotation angle of this wheel, the number of turns made by the reel during the rotation is estimated and it is verified whether the film has entered into the compression chamber. The injection of the film inside the compression chamber can also take place in other ways, for example by means of a sensor. When the injection of the film into the compression chamber is confirmed, the control unit confirms the start of the wrapping and activates the braking system.

It should be noted that even when the braking system is deactivated, a tension is generated in the film when it is taken up by the rollers of the compression chamber and when this tension force exceeds the spring force, the two parts open. In particular, when the parts of the duckbill are in the open configuration, one part remains stationary while the other moves away from the part which remains fixed, when the tension force of the film exceeds the force of the spring. The tension of the film in the absence of the braking system may not be large enough to overcome the force of the spring. In fact, the activation of the braking system applies a greater tension on the film and guarantees the opening of the two parts of the duckbill during the wrapping cycle. The end of the wrapping step is determined on the basis of the angular position of the tone wheel. At the end of the wrapping cycle, the duckbill moves upwards to the position where the film is drawn or to a position between the drawing position and the film injection position. At this time, while the bale is still rotating inside the compression chamber, the braking system is deactivated, so that the two parts of the duckbill move into the clamping configuration and grab the film. At this time, the cutting device is activated and the film is cut. It should be noted that the duckbill moves upwards so as not to interfere with the movement of the cutting device. This solution allows the film to be cut while the film that is still inside the compression chamber and is grabbed by the duckbill is tensioned. The cut film is inserted into the chamber due to the rotation of the bale and the wrapping cycle ends.

A kinematic mechanism is provided to move the duckbill upwards and downwards.

In one example, a track BI is provided. The track has a gulley. The gulley extends vertically. In this example, the duckbill is inserted into the gulley to move vertically within the track between the raised position and the lowered position.

The binding device includes a lever. The lever has a first end and a second end. The first end is connected to a fixed frame of the binding device. Preferably the first end is connected to the fixed frame by means of a spring M1. The lever is connected to the cutting device at an intermediate point. The lever has a wheel mounted in proximity to the second end. The wheel is in contact with the duckbill to follow the profile of the duckbill. In particular, the wheel follows a profile obtained directly on the part of the duckbill with which the wheel comes into contact as a result of the vertical movement of the duckbill.

The vertical movement of the duckbill between the lowered position and the raised position induces the displacement of the lever via interaction with the wheel, causing the operation of the cutting device and its displacement between the operating position and the rest position.

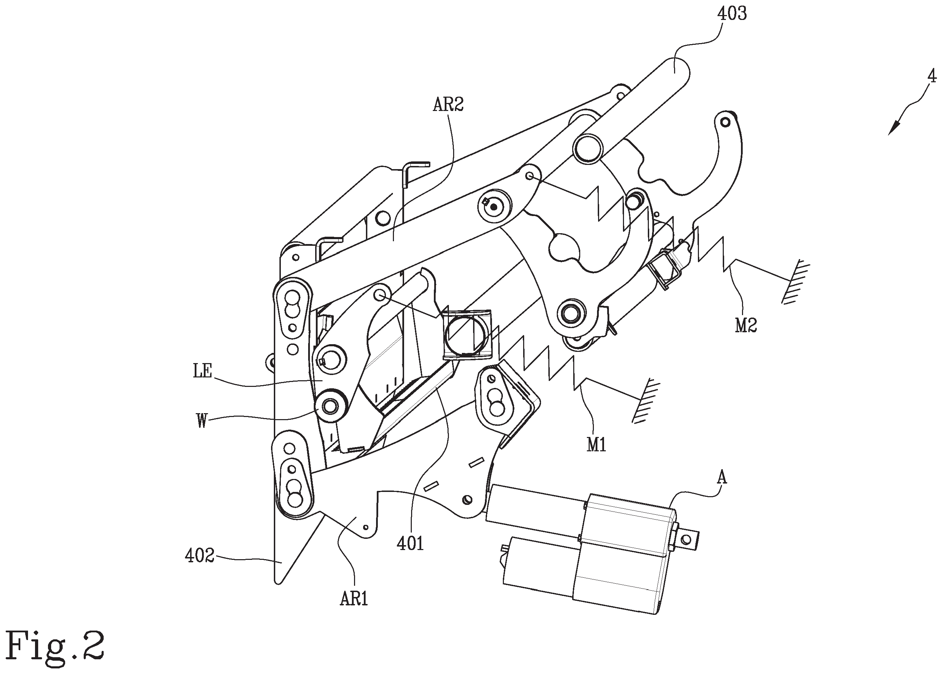

In another example, a four-bar linkage is provided to move the duckbill between the lowered and raised positions. Figures 2 illustrates an example of such a kinematic mechanism. In this example, two arms Ar1 and Ar2 are provided, each having one end connected to a spring M2 and a free end. These two arms have a movement parallel to each other and are connected by the duckbill, which is connected at the end of the first and second arms. Either the first or the second arm is connected to actuator A at an intermediate point to carry out a movement between the lowered position and the raised position.

In the case of the track, the actuator is connected to an articulated arm, by which it is moved vertically inside the track.

The cutting device is moved mechanically from the rest position to the operating position by means of a cam. In particular, a lever LE lever is provided hinged to the frame of the binding device so that it can rotate relative to it. The lever is at one end thereof which includes a roller W which is in contact with a shaped profile integral with the duckbill and follows the profile of the spout. This profile has a variable width from top to bottom along the vertical axis. The width of the lateral part is greater in the lower part. Therefore, when the duckbill is moved up and down, the lever rotates according to the profile of the lateral part, because the lever being embedded in the frame is stationary with respect to the lifting and lowering movement of the duckbill. The lever is fixed to the cutting device to move it between the operating position and the rest position. The lever, at the end opposite to the one where the wheel is connected, is connected to a spring M1, which forces the lever to follow the profile. For this reason, by using an actuator A it is possible to move both the duckbill and the blade. One of either the first or second part of the duckbill includes a rubber part, at least in the zone that comes into contact with the film. Preferably, the part that remains fixed in the clamping position includes the rubber. It should be noted that the mechanism for moving the duckbill and the blade is positioned on only one part of the frame; however, it can be envisaged to provide the same mechanism on the opposite side.

Preferably, the baler is a continuous baler. In particular, in a continuous baler the agricultural products are fed into a pre-chamber of the bale via a first feeding channel. The pre-chamber is separated from the compression chamber.

Further, a core of the bale is formed within the pre-chamber.

The core of the bale is transferred into the compression chamber at the end of its formation, and the feeding of the agricultural products to the pre-chamber is interrupted and the agricultural products are fed to the compression chamber via a second feeding channel.

In this example, the wrapping device is positioned in the top of the baler, between the pre-chamber and the compression chamber.

It should be noted that different kinematic mechanisms can be used to move the duckbill. In one example, one or more springs are provided to connect the kinematic mechanism that moves the duckbill to the frame to cooperate with the actuator to lift the duckbill.

During the operation of the baler, the binding material, such as a plastic film or a net, is drawn from the reel by means of the duckbill and fed along the scroll path towards the compression chamber. When the end of the binding material is introduced into the compression chamber, it is intercepted by the bale being formed and dragged by the rotation of the bale itself and of the rotary elements of the compression chamber. This rotation generates a tension in the binding material that extends along the scroll path to the duckbill.

Under these conditions of operation, the tension generated in the binding material acts on the two parts of the duckbill and tends to reciprocally move them away from each other, bringing the duckbill into the open configuration. In this configuration, the duckbill does not act as a restraint for the material but allows the film or net to slide freely along the scroll path while the bale continues to rotate and wrap with the binding material. The duckbill then acts as a device for feeding material during the wrapping step.

When the bale wrapping step is close to completion, the tension of the binding material may decrease. Under these conditions, the two parts of the duckbill return to the clamping configuration, in which the binding material is grabbed between the first and second parts of the duckbill. The material is therefore retained in a position located upstream of the cutting zone with respect to the feeding direction.

Subsequently, the cutting device is brought into the operating position to carry out the cutting of the binding material. Since the material is retained by the duckbill in the clamping configuration while the cutting device is in the operating position, the stretch of material comprised between the duckbill and the cutting zone is kept in tension.

In some embodiments, the two parts of the duckbill are stressed towards the clamping configuration by at least one elastic element. The action of the elastic element normally keeps the duckbill in the clamping configuration, while the opening of the duckbill during the wrapping step occurs automatically in response to the tension exerted by the binding material when it is pulled by the bale in rotation. The transition between the open configuration and the clamping configuration can therefore take place automatically depending on the tension conditions of the binding material. The movement of the duckbill between the drawing position and the injection position allows the binding material to be transferred from the reel zone to a position close to the compression chamber. In particular, in the drawing position the duckbill is configured to draw the material from the reel along the scroll path, while in the injection position the duckbill is configured to bring the end of the binding material in proximity to the compression chamber so that it can be intercepted by the rotating bale.

The cutting device is preferably positioned along the scroll path of the binding material in such a way that the cutting zone is located between the duckbill and the compression chamber. In this way, when the cutting device is brought into the operating position while the material is retained by the duckbill, the stretch of material between the duckbill and the cutting zone remains in tension and the cutting can be performed effectively.

After the binding material is cut, the end of the material from the reel remains held between the first and second parts of the duckbill in the clamping configuration. The end of the material is then available for a subsequent binding cycle and can be transferred again towards the compression chamber by means of the movement of the duckbill from the drawing position to the injection position.

In one example, the feeding direction of the binding material is (substantially) vertical and the duckbill is configured to move only vertically between a raised position and a lowered position. In particular, the duckbill is moved upwards to the raised position to draw the binding material from the reel and, subsequently, it is moved downwards to the lowered position to bring the end of the binding material in proximity to the compression chamber. The movement of the duckbill therefore takes place exclusively along a vertical direction, without any lateral or rotational movement components.

## Claims

1. A baler (1) for forming round bales of agricultural products, comprising:
- a compression chamber (2) for imparting a rotational movement to the agricultural products to form the bale;
- a pickup unit (3) configured to picking up agricultural products from the ground and feed them into the compression chamber;
- a binding device (4) for wrapping the formed bale with plastic film or a net, wherein the binding device comprises:
a reel of film or net providing the wrapping film or net,
a cutting device (401) movable between a rest position, in which the cutting device is spaced from the wrapping film, and a working position for cutting the wrapping film in a cutting zone along a feeding direction of the film;
a duckbill (402) for drawing the wrapping film or net from the reel along a scroll path (P) and for feeding the film or net into the compression chamber in the feeding direction, so that the bale is wrapped by the wrapping film or net as a result of the rotational movement of the bale;
wherein the duckbill is movable between a drawing position and an injection position, and wherein the duckbill includes a first part and a second part that are reciprocally movable towards and away from each other between a clamping configuration, in which the first and second parts are configured to grab the film or net between them, and an open configuration, in which the first and second parts do not impede the movement of the film or net along the scroll path, wherein the first and second parts are in the clamping configuration with the duckbill positioned upstream of the cutting zone relative to the film or net feeding direction and with the cutting device in the operating position.

2. The baler (1) according to claim 1, wherein the duckbill includes an elastic element to keep the first and second parts in the clamping configuration, and wherein the first and second parts are in the open configuration in response to the tension of the film or net generated in the wrapping film or net injected into the compression chamber due to the rotational movement of the bale, which exceeds the force of the elastic element, wherein the first and second parts return to the clamping configuration in the absence of the film or net tension.

3. The baler (1) according to any of the preceding claims, wherein the binding device includes a braking system operatively connected to the reel of film or net, the braking system having an active configuration, in which it is configured to apply resistance to the rotation of the film or net reel, thereby generating tension in the wrapping film or net, and an inactive configuration, in which no resistance is applied to the movement of the reel.

4. The baler (1) according to any of the preceding claims, wherein at least one of the first and second parts includes, at least in an area in contact with the film or net in the clamping configuration, a rubber part or another material with a high friction coefficient.

5. The baler (1) according to any of the preceding claims, wherein the duckbill is vertically movable between a raised position and a lowered position.

6. The baler (1) according to claim 5, wherein the duckbill is configured to be:
- in the raised position, with the first and second parts in the clamping configuration and the cutting device in the cutting position;
- in the lowered position, with the first and second parts in the clamping configuration and the cutting device in the rest position, to inject the film or net into the compression chamber at the beginning of a bale wrapping cycle;
- in the lowered position, with the first and second parts in the open configuration and the cutting device in the rest position, after the injection of the film or net during the bale wrapping cycle.

7. The baler (1) according to claims 5 or 6, wherein the binding device includes:
(i) a kinematic mechanism comprising:
a first arm (AR1) and a second arm (AR2), each having one end articulated to a fixed rotation point and a movable end, wherein the duckbill is connected to the movable end of the first and second arms, wherein at least one of the first and second arms is configured to be connected to an actuator at an intermediate point to perform a movement between the lowered position and the raised position; or
(ii) a kinematic mechanism including a rail with an elongated vertical groove, wherein the duckbill is inserted within the groove to move vertically inside the rail between the raised position and the lowered position.

8. The baler (1) according to any of claims 5 to 7, wherein the binding device includes:
- an actuator (A);
- a lever having a first end connected to a fixed frame of the binding device via a spring (M1), an intermediate point where the cutting device is mounted, and a wheel mounted in proximity to its second end, wherein the wheel is in contact with the duckbill to follow its profile with the vertical movement of the duckbill;
wherein the vertical movement of the duckbill between the lowered position and the raised position induces the displacement of the lever via interaction with the wheel, causing the activation of the cutting device and its movement between the operating position and the rest position.

9. The baler (1) according to any of the preceding claims, further comprising:
- a pre-chamber separate from the compression chamber (3);
- a first feeding channel configured to feed agricultural products into the pre-chamber;
- a second feeding channel configured to feed agricultural products into the compression chamber (3);
- a control unit configured to:
activate the first feeding channel and deactivate the second, so that a core of the bale is formed in the pre-chamber;
subsequently activate the second feeding channel and deactivate the first to transfer the formed core from the pre-chamber to the compression chamber, allowing the bale to form in the compression chamber.

10. The baler (1) according to any of the preceding claims, wherein the cutting device includes a horizontally extending blade comprising a plurality of teeth arranged along it, wherein the teeth are equidistant from each other at a predetermined distance wherein the predetermined distance is at least 15 mm.

11. A method for forming round bales of agricultural products, comprising the following steps:
- picking up agricultural products from the ground using a pickup unit (3) of a baler (1) and feeding them into a compression chamber (2) of the baler;
- applying a rotational movement to the agricultural products inside the compression chamber to form the bale;
- through a duckbill (402) drawing a wrapping film or net from a reel along a scroll path (P) and feeding the wrapping film or net into the compression chamber in a feeding direction, so that the bale is wrapped with the wrapping film or net due to the rotary motion of the bale;
- moving a cutting device (401) between a rest position, in which the cutting device is distant from the wrapping film or net, and a working position to cut the wrapping film or net in a cutting zone along a feeding direction;
- grabbing the film or net with a first and second part of the duckbill while the cutting device is in contact with the film or net to cut it in the cutting zone, in a position upstream of the cutting zone relative to the feeding direction of the film or net;
- wrapping the bale with the plastic film or net.

12. The method according to claim 11, wherein the first and second parts are held in a clamping position, in which the first and second parts are configured to grab the film or net between them, by an elastic element, wherein the first and second parts move apart from each other when the tension of the film or net exceeds the force of the elastic element, and move closer to each other in the absence of tension in the film or net, wherein in the clamping.

13. Method according to claim 11 or 12, comprising a step of moving the duckbill vertically upwards and downwards between a raised position and a lowered position, the method comprising the following steps:
- moving the duckbill beak to the raised position and grabbing and drawing the film or net from the bale while the cutting device is in the cutting position;
- moving the duckbill to the lowered position while holding the film or net, while the cutting device moves to the resting position, in order to move the film or net in the feeding direction;
- releasing the film or net when the duckbill is in the lowered position and when the film or net is injected into the compression chamber.

14. Method according to any one of claims 12 to 13, comprising the following steps:
- feeding agricultural products into a pre-chamber of the baler (1) through a first feeding channel, the pre-chamber being separate from the compression chamber;
- forming a bale core inside the pre-chamber;
- transferring the bale core into the compression chamber upon completion of its formation, stopping the feeding of agricultural products into the pre-chamber, and beginning to feed them into the compression chamber through a second feeding channel.

15. Method according to any one of claims 12 to 14, comprising a step of making an irregular cut on the film or net during the cutting passage of the film or net.
